# EUROPÄISCHE PATENTSCHRIFT

(11) **EP 2 496 794 B1**
(45) Veröffentlichungstag und Bekanntmachung des Hinweises auf die Patenterteilung: **22.03.2017**
(21) Anmeldenummer: 10771762.1
(22) Anmeldetag: 02.11.2010
(51) Int. Cl.: F01D 9/04, F01D 5/14

(54) **TURBOMASCHINE MIT AXIALER VERDICHTUNG ODER EXPANSION**
TURBOMACHINE WITH AXIAL COMPRESSION OR EXPANSION
TURBOMACHINE À COMPRESSION OU EXPANSION AXIALE

(30) Priorität: 06.11.2009 DE 102009052142
(43) Veröffentlichungstag der Anmeldung: 12.09.2012
(73) Patentinhaber: MTU Aero Engines AG, 80995 München (DE)
(72) Erfinder: HERGT, Alexander, 53111 Bonn (DE); MEYER, Robert, 14624 Dallgow (DE); BAIER, Ralf-Dietmar, 80995 München (DE)
(74) Vertreter: dompatent von Kreisler Selting Werner - Partnerschaft von Patent- und Rechtsanwälten mbB
(86) Internationale Anmeldenummer: PCT/EP2010/066621
(87) Internationale Veröffentlichungsnummer: WO 2011/054812

(56) Entgegenhaltungen:
- EP-A1- 1 688 586
- EP-A1- 1 927 723
- EP-A2- 1 074 697
- DE-A1- 2 841 616
- GB-A- 2 248 885
- JP-A- 52 054 808
- US-A- 3 039 736

## Beschreibung

Die Erfindung betrifft eine Turbomaschine mit axialer Verdichtung oder Expansion, mit einem Kranz von Schaufeln, deren radial äußere Enden mit einer ringförmigen Endwand verbunden sind und die jeweils eine Anströmkante, eine Abströmkante, eine Druckseite und eine Saugseite aufweisen.

Bei der Durchströmung von Leit- und Laufschaufelgittern von Turbomaschinen kommt es zu Verlusten, welche den Wirkungsgrad der Schaufelreihen und damit auch der gesamten Maschine begrenzen. Diese Strömungsverluste lassen sich im wesentlichen in Reibungsverluste an den Oberflächen (Schaufel sowie Naben- und Gehäusewände) und Verluste aufgrund von Sekundärströmungen im Randzonenbereich der Schaufelgitter unterteilen. Speziell die Verringerung der Sekundärströmungsverluste ist ein wichtiger Bestandteil der Forschung auf dem Gebiet der Verdichtertechnologie, da vor dem Hintergrund einer immer weiter steigenden Nachfrage an Energie und eines stetig zunehmenden Flugverkehrsaufkommens der Belastung der Umwelt durch CO₂ nur durch effizientere Gasturbinen und Flugtriebwerke entgegengewirkt werden kann.

Die Beeinflussung und Verringerung der Sekundärströmung und der aus ihr resultierenden Verluste ist speziell in der Verdichteraerodynamik in den letzten Jahrzehnten eines der zentralen Themen der Forschung gewesen. Da gerade die Strömungsverhältnisse in den Randzonen zwischen den Schaufeln und den Naben- und Gehäusewänden durch komplexe Wirbelsysteme und Sekundärströmungen geprägt sind, stellt sich deren gezielte Beeinflussung als wissenschaftliche Herausforderung dar.

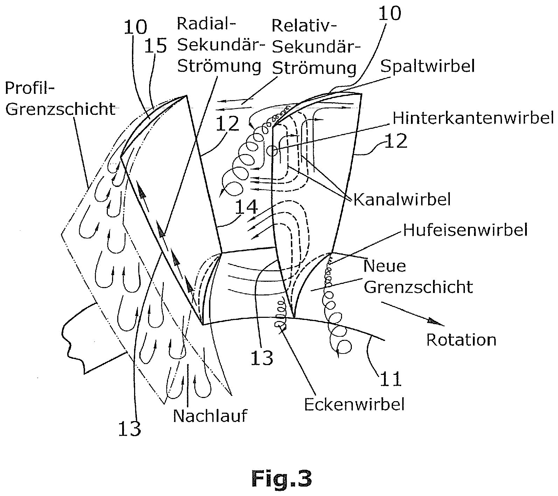

Die Figur 3 zeigt die wesentlichen Sekundärströmungen und Wirbelstrukturen wie sie sich in einem Verdichtergitter ausbilden. Die beinhaltet auch Sekundärströmungen, welche aufgrund eines radialen Spaltes zwischen der Schaufel und der radial äußeren Endwand entstehen können. In Figur 3 sind zwei Schaufeln 10 eines Schaufelkranzes dargestellt. Die Schaufeln sind an ihren radial inneren Enden mit einer Nabe 11 verbunden und an ihren radial äußeren Enden mit einem Außenring, der die Endwand bildet und in der Zeichnung nicht dargestellt ist. Die Schaufeln bilden somit ein Schaufelgitter, das einen Stator oder auch einen Rotor eines Verdichters bilden kann. Die Schaufeln 10 haben jeweils eine Anströmkante 12, eine Abströmkante 13, eine Druckseite 14 und eine Saugseite 15. Die Druckseite 14 ist konkav gestaltet und die Saugseite 15 ist konvex gestaltet. Infolge der sich an der Saugseite 15 ausbildenden höheren Strömungsgeschwindigkeit ist dort der Druck gering. An der Druckseite 14 hingegen entsteht bei dem Verdichtergitter ein erhöhter Druck. Im Bereich der Anströmkante 12 (Vorderkante) kommt es an der Nabe 11 (bei Statoren auch an der Gehäusewand) zu einem Aufrollen der Grenzschicht, so dass sich dort der sogenannte Hufeisenwirbel bildet. Weiterhin bildet sich aufgrund des Druckgradienten zwischen der Druckseite einer Schaufel und der Saugseite der benachbarten Schaufel eine Querströmung in der Passage an den begrenzenden Wänden von Nabe und Gehäuse aus. Aus dieser Querströmung resultieren zwei zueinander entgegengesetzt rotierende Kanalwirbel, welche an der Naben- und Gehäusewand energiearmes Grenzschichtmaterial in den Eckenbereich zwischen Wand und Schaufeldruckseite transportieren. Die starke Verzögerung der Strömung im Schaufelgitter sorgt dafür, dass es im Bereich der Ecke zu einer massiven Ablösung der Strömung kommt. Aus dieser Ablösung und der vorhandenen Rückströmgebieten auf Schaufel und den Wänden ergeben sich signifikante Totaldruckverluste in der Schaufelpassage, welche mit sinkendem Schaufelhöhenverhältnis immer dominanter werden. Eine weitere Steigerung des Wirkungsgrades moderner Verdichter ist demzufolge stark mit der Reduzierung dieser Verluste gekoppelt.

Eine Turbomaschine ist beschrieben in US 6,419,446 B1. Bei dieser Turbomaschine handelt es sich um eine Gasturbine. An die Anströmkanten der Schaufeln schließen sich in den Übergangsbereichen zu den Endwänden Abweiskeile an, die sich jeweils in stromaufwärtiger Richtung verjüngen. Die Abweiskeile haben konvex gekrümmte Leitflächen. Sie bilden gewissermaßen "Schuhe", die an den Endbereichen der Anströmkante nach vorne abstehen. Abweiskeile mit geraden oder konkaven Leitflächen sind in DE 28 41 616 A1, die eine Turbomaschine gemäß dem Oberbegriff des Patentanspruchs 1, offenbart.

Ferner ist eine Turbomaschine als Axialverdichter beschrieben in DE 198 34 647 C2.

Dieser Axialverdichter hat einen Kranz von Schaufeln, die an ihren äußeren Enden mit einer Endwand verbunden sind. Auf den Schaufeln sind Hilfsflügel angeordnet, die von der Saugseite der Schaufel abstehen und gegen die an der betreffenden Stelle herrschende lokale Strömung angestellt sind, wodurch sich induziert wird. Da der Hilfsflügel im Bereich der Eckenströmung angebracht ist, beeinflusst er die Eckenströmung, indem er aufgrund einer Drehbewegung schnellströmendes Fluid von der Außenströmung entlang der dem Hilfsflügel zugeordneten Schaufeloberfläche der langsamen Eckenströmung zuführt, diese beschleunigt und so am Ablösen hindert. Ferner hat der Hilfsflügel die Wirkung, dass er die Eckenströmung kanalisiert und dadurch beschleunigt. Außerdem wird bewirkt, dass der Hilfsflügel als Zaun wirkt, der verhindert, dass langsam strömendes Fluid der Eckenströmung sich mit der schnelleren Umströmung der Schaufelmitte vermischen kann.

In DE 10 2006 057 063 B3 ist ein Axialverdichter beschrieben, bei dem über einer Schaufel an der Endwand mehrere Querlamellen angeordnet sind, deren Sehnenlängen mit zunehmendem Abstand von der Saugseite der Statorschaufel abnehmen. Dadurch sollen die Verluste von Strömungsablösungen an den Wänden reduziert und es soll eine Wirkungsgradsteigerung erreicht werden.

Die bekannten Lösungen erfordern einen erhöhten Fertigungsaufwand. Häufig ist die Überführung des experimentellen Status in die praktische Anwendung nicht vollständig geklärt, da noch strukturelle Festigkeit und Lebensdauer der Bauteile, die manchmal stark belastet sind, verbessert werden müssen.

Der Erfindung liegt die Aufgabe zugrunde, eine Turbomaschine zu schaffen, bei der mit relativ einfachen Mitteln die Totaldruckverluste an der Schaufelpassage reduziert sind, wodurch eine Steigerung des Wirkungsgrades gegeben ist.

Die erfindungsgemäße Turbomaschine hat die Merkmale des Patentanspruchs 1. Sie sieht vor , dass die Höhe der Leitflächen in Bezug auf die Endwand sich von einem gemeinsamen Gipfelpunkt aus stromabwärts verringert.

Die Erfindung basiert auf dem Gedanken, die Entstehung und Ausbildung bzw. Ausbreitung des Kanalwirbels und die Querströmung an der Endwand durch Erzeugung zweier starker Wirbel gezielt zu beeinflussen. Die Wirbel werden durch den Abweiskeil als Paar direkt vor der Schaufelanströmkante erzeugt. Dieses Wirbelpaar besteht aus einem saugseitigen und einem druckseitigen Wirbel. Die Rotationsrichtung des saugseitigen Wirbels ist so, dass er im Bereich der Endwand entgegen der Querströmung rotiert und diese im vorderen Bereich der Schaufel ablenkt. Auf diese Weise wird die Ansammlung von energiearmem Grenzschichtmaterial im Eckenbereich verringert und das Einsetzen der Ablösung wird verzögert.

Die Erfindung beruht im wesentlichen auf der Ausnutzung bzw. Ersetzung vorhandener Strömungsstrukturen im Randzonenbereich eines Verdichtergitters, da der schwache Hufeisenwirbel durch das neue Wirbelpaar überlagert wird. Im Gegensatz zu aktiven Beeinflussungsmaßnahmen wird keine zusätzliche Energie benötigt, welche in die Strömung eingebracht wird, sondern die vorhandene Energie der Strömung wird umgelenkt und zur Strömungsbeeinflussung genutzt. Anders als beim Einsatz von Wirbelgeneratoren soll durch die erzeugten Wirbel keine Durchmischung bzw. Energetisierung der Grenzschicht erreicht werden, sondern die Strömung soll gezielt abgelenkt und geleitet werden. Das bedeutet, dass durch die neue Beeinflussungsmethode nicht gegen die charakteristischen Strukturen der Randzonenströmung gearbeitet wird, was im Allgemeinen zu zusätzlichen Verlusten führt, sondern dass die vorhandene Strömungsenergie umgelenkt wird. Die Erzeugung des Wirbelpaares kann schon durch eine kleine Modifikation an der Endwand realisiert werden und ist dadurch mit geringem konstruktivem und fertigungstechnischem Aufwand umsetzbar. Durch die Einfachheit der geometrischen Form der Endwandmodifikation kann eine Anpassung an verschiedene Beschauflungen, Zuströmgrenzschichten und Arbeitsbereiche von Verdichtergittern leicht vorgenommen werden.

Die Erfindung sieht ferner vor, dass die Leitflächen an einer gemeinsamen Buglinie beginnen, die von der Endwand aus konkav ansteigt, so dass sie der Anströmung einen geringen
Strömungswiderstand entgegensetzt und keine wesentliche eigene Wirbelbildung bewirkt.

Vorzugsweise sind die Leitflächen des Abweiskeils konkav geformt, um gegensinnig rotierende Wirbel zu erzeugen. Konkave Leitflächen sind jedoch nicht unbedingt erforderlich, um die erfindungsgemäße Wirkung zu erreichen. Die Leitflächen können beispielsweise auch eben sein.

Die maximale Höhe des Abweiskeiles beträgt vorzugsweise 5 - 8 % der radialen Schaufellänge. Sie hängt wesentlich von der speziellen Geometrie der Schaufeln ab. Die Erfindung ist sowohl bei geraden Schaufeln anwendbar, als auch bei Bow-Beschaufelungen, bei denen die Schaufeln einen bogenförmigen radialen Verlauf haben. Der Abweiskeil bildet gewissermaßen einen Vorkeil, der im Endwandbereich der Anströmkante der Schaufel vorgesetzt ist. Er leitet in diesem Bereich die Anströmung an der Anströmkante der Schaufel vorbei und gleichzeitig von der Endwand fort. Der Abweiskeil kann als Hohlkeil ausgebildet sein, der einen Freiraum enthält, in den die Anströmkante der Schaufel hineinragt.

Die erfindungsgemäße Turbomaschine umfasst sowohl Axialverdichter als auch Axialturbinen.

Im Folgenden wird unter Bezugnahme auf die Zeichnungen ein Ausführungsbeispiel der Erfindung näher erläutert.

Es zeigen:
- Fig. 1: eine Darstellung zweier Schaufeln im Bereich der Endwand sowie die Wirbelsysteme, die sich an der Druckseite und der Saugseite der Schaufeln bilden,
- Fig. 2: eine vergrößerte Darstellung des Abweiskeiles und
- Fig. 3: eine Darstellung der Sekundärströmungen und Wirbel in einem Axialverdichtergitter nach Hübener (1996).

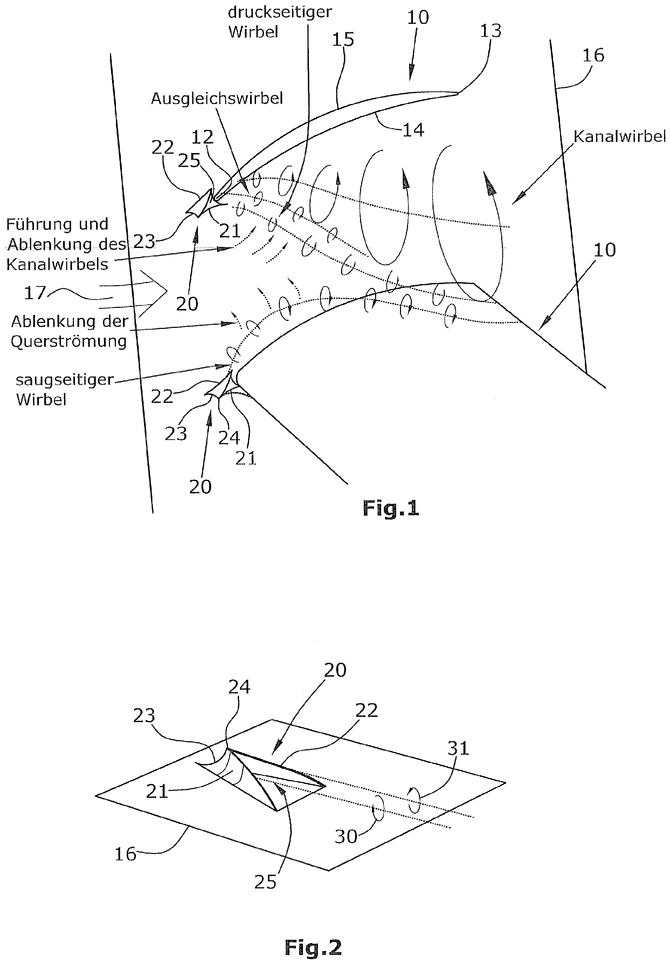

In Figur 1 sind zwei Schaufeln 10 dargestellt, die zusammen mit weiteren Schaufeln einen Kranz bilden und von einer (nicht dargestellten) Nabe radial abstehen. Die radial äußeren Enden der Schaufeln 10 sind mit einer ringförmigen Endwand 16 verbunden. Nabe und Endwand bilden zusammen mit den Schaufeln das sogenannte Schaufelgitter.

Jede Schaufel 10 hat eine vordere Anströmkante 12 und eine hintere Abströmkante 13. Die Unterseite bildet eine Druckseite 14 und die Oberseite bildet eine Saugseite 15. Bei einem Rotor rotiert das gesamte Schaufelgitter. Bei einem Stator ist hingegen das gesamte Schaufelgitter ortsfest und es wird von einer Luftströmung angeströmt. In Figur 1 ist die Anströmung mit einem Pfeil 17 bezeichnet.

Stromauf von jeder Schaufel 10 ist vor der jeweiligen Anströmkante 12 ein Abweiskeil 20 an der Endwand 16 befestigt. Der Abweiskeil weist zwei stromabwärts divergierende Leitflächen 21, 22 auf, die sich am vorderen Ende in einer gemeinsamen Buglinie 23 vereinigen, wie dies aus Figur 2 ersichtlich ist. Die Buglinie 23 steigt von der Endwand 16 aus progressiv an und sie endet in einem Gipfelpunkt 24, an dem der Abweiskeil seine maximale Höhe hat. Stromab von diesem Gipfelpunkt verringert sich die Höhe der Leitflächen 21, 22 stetig bis auf Null. Die Leitflächen 21, 22 sind konkav geformt, so dass sie eine Teilröhrenkontur haben. Zwischen den Leitflächen 21, 22 ist ein Freiraum 25 vorhanden, in den die Anströmkante 12 der angrenzenden Schaufel hineinragt. Es ist aber auch möglich, dass sich die Schaufel in einem Abstand hinter dem Abweiskeil befindet.

In Figur 1 sind auch die von den Leitflächen 21, 22 erzeugten Wirbel dargestellt. Es handelt sich um den druckseitigen Wirbel 30, der von der Leitfläche 21 erzeugt wird und den saugseitigen Wirbel 31, der von der Leitfläche 22 erzeugt wird. In den Figuren 1 und 2 sind auch die Rotationsrichtungen der jeweiligen Wirbel eingezeichnet. Aus Figur 1 ist erkennbar, dass der saugseitige Wirbel 31 aufgrund seiner Rotationsrichtung an der Endwand 16 die Querströmung im vorderen Bereich der Schaufel ablenkt. Die Ausbildung des Wirbelsystems aus druckseitigem Wirbel 30, Ausgleichswirbel und Kanalwirbel ist ebenfalls in Figur 1 dargestellt. Zusätzlich ist noch die Richtung der Ablenkung und Führung des Kanalwirbels durch den druckseitigen Wirbel verdeutlicht.

Durch den Abweiskeil wird der an der Endwand entstehende Hufeisenwirbel durch einen energiereichen Wirbel überlagert bzw. ersetzt, wodurch die Entstehung des Kanalwirbels in Strömungsrichtung nach hinten verschoben wird. Der druckseitige Wirbel 30 bildet eine Führung für den Kanalwirbel. Dies führt zu einer Verringerung der Querström- und Rückströmgebiete auf der Schaufel und damit zu einer Reduzierung der Randzonenverluste.

## Patentansprüche

1. Turbomaschine mit axialer Verdichtung oder Expansion, mit einem Kranz von Schaufeln (10), deren radial äußere Enden mit einer ringförmigen Endwand (16) verbunden sind und die jeweils eine Anströmkante (12), eine Abströmkante (13), eine Druckseite (14) und eine Saugseite (15) aufweisen, wobei an der Endwand (16) stromauf vor der Anströmkante (12) ein Abweiskeil (20) vorgesehen ist, der zwei stromabwärts divergierende Leitflächen (21, 22) aufweist, welche druckseitige und saugseitige Wirbel (30, 31) erzeugen, wobei die Höhe der Leitflächen (21, 22) in Bezug auf die Endwand (16) sich von einem gemeinsamen Gipfelpunkt (24) aus stromabwärts verringert und wobei die Leitflächen (21, 22) in einer gemeinsamen Buglinie (23) beginnen,
**dadurch gekennzeichnet,**
**dass** die Buglinie (23) von der Endwand (16) aus konkav ansteigt.

2. Turbomaschine nach Anspruch 1, **dadurch gekennzeichnet, dass** die Leitflächen (21, 22) konkav geformt sind, um gegensinnig rotierende Wirbel (30, 31) zu erzeugen.

3. Turbomaschine nach einem der Ansprüche 1 oder 2, **dadurch gekennzeichnet, dass** die maximale Höhe des Abweiskeils (20) 5 - 8 % der radialen Schaufellänge beträgt.

4. Turbomaschine nach einem der Ansprüche 1 -3, **dadurch gekennzeichnet, dass** zwischen den Leitflächen (21, 22) ein Freiraum (25) besteht, in welchen die Anströmkante (12) der Schaufel (10) hineinragt.

## Claims

1. A turbomachine with axial compression or expansion, comprising a ring of blades (10) whose radially outer ends are connected to an annular end wall (16) and which each have a leading edge (12), a trailing edge (13), a pressure side (14) and a suction side (15), wherein a deflector wedge (20) is provided on the end wall (16) in front of the leading edge (12), seen in the upstream direction, the deflector wedge having two guide surfaces (21, 22) diverging in the downstream direction that generate pressure-side and suction-side vortices (30, 31), wherein the height of the guide surfaces (21, 22) with respect to the end wall (16) decreases in the downstream direction from a common peak (24) and the guide surfaces (21, 22) start in a common bow line (23),
**characterized in that**
the bow line (23) rises concavely from the end wall (16) onward.

2. The turbomachine of claim 1, **characterized in that** the guide surfaces (21, 22) are concave so as to generate vortices (30, 31) rotating in opposite directions.

3. The turbomachine of one of claims 1 or 2, **characterized in that** the maximum height of the deflector wedge (20) is 5-8% of the radial blade length.

4. The turbomachine of one of claims 1-3, **characterized in that** a free space (25) exists between the guide surfaces (21, 22), into which the leading edge (12) of the blade (10) protrudes.

## Revendications

1. Turbomachine à compression ou expansion axiale avec une couronne de pales (10) dont les extrémités radiales extérieures sont attachées à une paroi d'extrémité annulaire (16) et qui présentent chacune un bord d'attaque (12), un bord de fuite (13), une face de compression (14) et une face d'aspiration (15), un coin de chasse (20) étant prévu à la paroi d'extrémité (16) en amont devant le bord d'attaque (12), lequel coin comprend deux faces de guidage (21, 22) divergeant en aval qui engendrent des tourbillons (30, 31) du côté de la face de compression et du côté de la face d'aspiration, la hauteur des faces de guidage (21, 22) par rapport à la paroi d'extrémité (16) diminuant à partir d'un sommet commun (24) en direction aval et les faces de guidage (21, 22) s'étendant à partir d'une ligne de bord avant (23) commune,
**caractérisée en ce que** la ligne de bord avant (23) monte de manière concave à partir de la paroi d'extrémité (16).

2. Turbomachine selon la revendication 1, **caractérisée en ce que** les faces de guidage (21, 22) présentent une forme concave afin d'engendrer des tourbillons (30, 31) à sens de rotation opposés.

3. Turbomachine selon l'une des revendications 1 ou 2, **caractérisée en ce que** la hauteur maximale du coin de chasse (20) est de 5 à 8 % de la longueur de pale radiale.

4. Turbomachine selon l'une des revendications 1 à 3, **caractérisée en ce qu'**il existe un espace libre (25) entre les faces de guidage (21, 22) dans lequel s'étend le bord d'attaque (12) de la pale (10).
